# EUROPÄISCHE PATENTSCHRIFT

(11) **EP 1 760 046 B1**
(45) Veröffentlichungstag und Bekanntmachung des Hinweises auf die Patenterteilung: **03.08.2011**
(21) Anmeldenummer: 06018501.4
(22) Anmeldetag: 04.09.2006
(51) Int. Cl.: C02F 1/00

(54) **Kompaktes Wasserreinigungsgerät für Teiche**
Compact water purification set for ponds
Purificateur d'eau compact pour étangs

(30) Priorität: 06.09.2005 DE 10542457
(43) Veröffentlichungstag der Anmeldung: 07.03.2007
(73) Patentinhaber: Oase GmbH, 48477 Hörstel-Riesenbeck (DE)
(72) Erfinder: Wagner Utz, 48155 Münster (DE); Möllers Paul, 48346 Ostbevern (DE); Hoffmeier Dieter, 49477 Ibbenbüren (DE)
(74) Vertreter: Engelmann, Kristiana

(56) Entgegenhaltungen:
- WO-A-97/41960
- DE-U1- 9 410 633
- GB-A- 2 371 244
- US-A- 3 169 920
- US-A- 3 788 982
- US-A- 4 092 245
- US-A- 4 196 081
- US-A- 5 147 532

## Beschreibung

Die vorliegende Erfindung betrifft ein Wasserreinigungsgerät für Teiche oder ähnliche Gewässer, z.B. Springbrunnenanlagen oder dergleichen, mit einem Gehäuse, das eine gewässerseitig angeordnete Einlassöffnung aufweist, die über ein bewegliches Schließelement zumindest teilweise verschließbar ist. Derartige Wasserreinigungsgeräte, meist als Skimmer bezeichnet, weisen einen Grobschmutzabscheider und manchmal bereits eine Pumpe auf, wobei die das Wasser in Richtung einer Auslassöffnung des Gehäuses transportierende Pumpe und der Grobschmutzabscheider beide innerhalb des Gehäuses angeordnet sind.

Einem solchen Wasserrelnlgungsgerät nach dem Stand der Technik haftet der Nachteil an, dass das von diesem Wasserreinigungsgerät gereinigte Wasser nur unvollständig sauber ist. Für die weitere Reinigung des Wassers wird daher das Wasser aus dem Gehäuse zu einer weiteren Filtereinheit transportiert, dort gereinigt und anschließend wieder dem Gewässer zugeführt. Dieses geschieht in der Regel wiederum über eine dem Wasserreinigungsgerät zugeordnete Pumpeneinheit. Somit ist entweder das Wasser nicht gründlich gereinigt oder andererseits ein erheblicher Aufwand notwendig, um zusätzlich zu dem Grobschmutzabscheider eine weitere Filtereinheit im Bereich des Gewässers oder in der Nähe davon vorzuhalten.

Ebenfalls bekannt ist es aus der US 3,169,920, eine Reinigungs- und Desinfektionseinheit seitlich von Schwimmbädern anzuordnen. Bei dieser Vorrichtung wird zu desinfizierendes Wasser von einem Grobschmutzabschelder über eine Pumpe zu einer weiteren Filtereinheit geleitet. Darüber hinaus wird das Wasser zusätzlich mit Chlor versetzt.

In der DE 94 10 633 U1 ist eine Vorrichtung zur Aufbereitung von häuslichem Abwasser gezeigt, die beispielsweise in einem Schrank untergebracht eine Vielzahl von für die Reinigung von häuslichem Abwasser vorgesehenen Filtereinheiten aufweist. Auch diese Vorrichtung ist nicht für Teiche od.dgl. Gewässer geeignet. Insbesondere kann diese Vorrichtung nicht unauffällig am Teichrand angeordnet werden.

Es ist daher Aufgabe der vorliegenden Erfindung, ein Wasserreinigungsgerät zu schaffen, das die Nachteile des Standes der Technik vermeidet und insbesondere ohne großen Aufwand an einen Teich oder ein ähnliches Gewässer anzuschließen ist.

Die Aufgabe wird gelöst durch ein Wasserreinigungsgerät nach Anspruch 1. Demzufolge ist ein erfindungsgemäßes Wasserreinigungsgerät kompakt ausgebildet mit einem Gehäuse, das zumindest eine Befestigungsvorrichtung zum Anbringen des Wasserreinigungsgeräts an einem Teichrand und eine gewässerseitig anzuordnende Einlassöffnung aufweist, die über ein als Skimmer ausgebildetes bewegliches Schließelement zumindest teilweise schließbar ist. Darüber hinaus sind ein Grobschmutzabscheider und eine Pumpe vorgesehen, wobei die das Wasser in Richtung einer Auslassöffnung des Gehäuses transportierende Pumpe und der Grobschmutzabscheider innerhalb des Gehäuses angeordnet sind, und wobei das Wasserreinigungsgerät einem strömungsmäßig dem Grobschmutzabscheider nachgeschalteten Feinfilter aufweist, welcher ebenfalls innerhalb des Gehäuses angeordnet ist, und die Pumpe und eine als UVC-Filter ausgebildete Strahlungsfiltervorrichtung in einem von dem Grobschmutzabscheider und dem Feinfilter räumlich getrennten Bereich des Gehäuses angeordnet sind. Das von dem Grobschmutzabscheider vorgereinigte und von gröberem Schmutz wie beispielsweise Blättern, Federn oder anderen auf der Wasseroberfläche schwimmenden Gegenständen gereinigte Wasser wird bereits innerhalb des Gehäuses durch den nachgeschalteten Feinfilter geleitet und dort weiter gesäubert. Das as Wasser muss nicht durch weitere Filter- oder Pumpeneinheiten außerhalb des Gerätegehäuses geführt werden. Die Unterbringung beider Filtereinheiten in einem einzigen Gehäuse stellt somit ein kompaktes Wasserreinigungsgerät zur Verfügung, das einfacher als bisher im Stand der Technik bekannt mit dem Teich oder Gewässer verbunden werden kann, da die Anordnung einer weiteren externen, über zu verlegende Rohrleitungen erreichbaren Filtereinheit entfällt. Reibungs- und Druckverluste werden so minimiert.

Bevorzugt ist der Feinfilter strömungsmäßig vor der Pumpe und somit zwischen Pumpe und Grobschmutzabscheider angeordnet. Hierdurch verschmutzt die Pumpe weniger und das Wasser muss nicht durch den Feinfilter hindurchgedrückt werden.

Vorteilhafterweise weist ein Deckel zur Abdeckung der oberen Gehäuseseite eine im Querschnitt U-förmige Form auf, deren Seitenkanten zusätzlich einen in etwa treppenförmigen Absatz aufweisen können. Hierdurch ist es möglich, den Deckel sowohl in seiner normalen Gebrauchsstellung als auch umgedreht auf das Gehäuse aufzusetzen. Im umgekehrten Fall wird hierdurch ein von den Seitenrändern des Deckels umrandeter Begrünungsbereich ausgebildet, der die unauffällige Anbringung des Wasserreinigungsgerätes am Teichrand gewährleisten kann.

Weitere Vorteile und Einzelheiten der Erfindung lassen sich den nachfolgend beschriebenen Ausführungsbeispielen entnehmen. In den schematischen Zeichnungen zeigt:
- Fig. 1: eine geschnittene, perspektivische Ansicht eines erfindungsgemäßen Wasserreinigungsgerätes,
- Fig. 2: eine teilweise geschnittene Seitenansicht eines weiteren erfindungsgemäßen Wasserreinigungsgerätes aus Richtung des Teiches,
- Fig. 3: eine perspektivische Darstellung eines Teils eines Feinfilters.

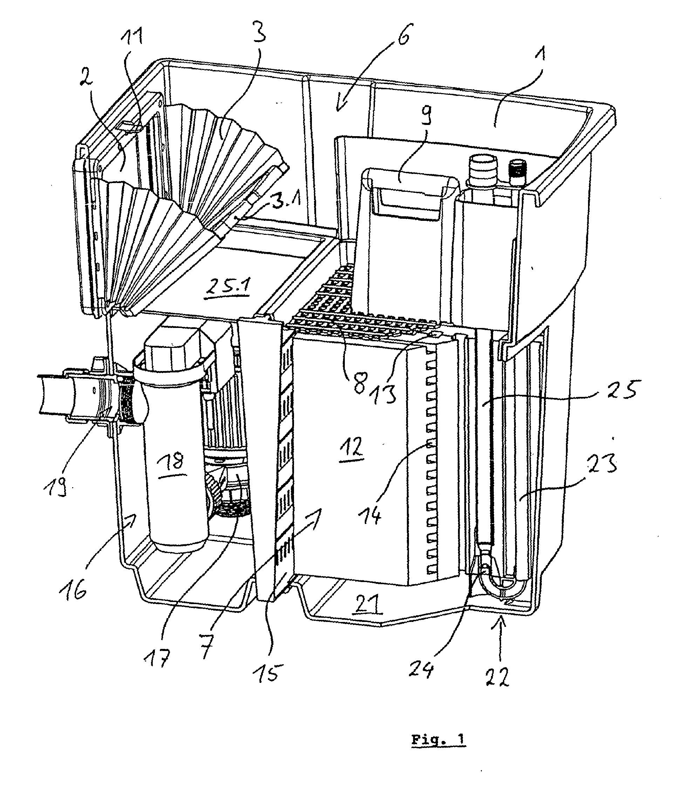

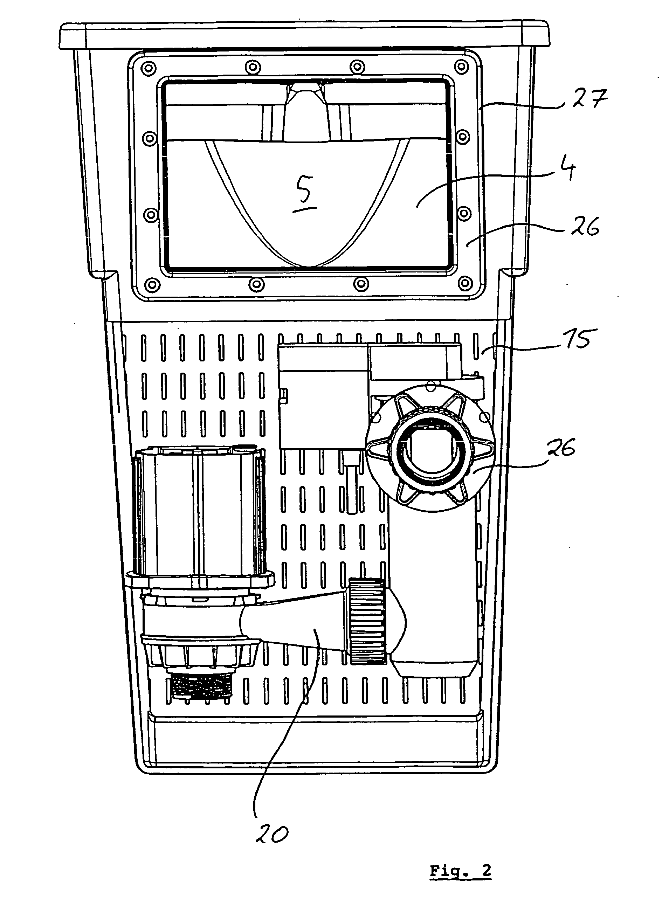

Ein in Fig. 1 gezeigtes Wasserreinigungsgerät für Teiche oder dergleichen Gewässer weist ein Gehäuse 1 auf, welches durch die Verwendung eines nicht dargestellten Deckels an seiner Oberseite geöffnet werden kann. Das Wasserreinigungsgerät beinhaltet einen sogenannten Skimmer und weist daher eine gewässerseitige Einlaßöffnung 2 auf, die über ein Skimmer-Element bzw. eine Skimmer-Klappe 3.1 mit dem in Fig. 1 dargestellten Faltenbalg 3 zumindest teilweise schließbar ist. Statt eines solchen Faltenbalgs 3 kann auch eine in Fig. 2 dargestellte Folie 4, die beispielsweise eine kegelförmige Auswölbung 5 aufweist, den Einstrom des zu reinigenden Wassers in das Wasserreinigungsgerät begrenzen.

Die Verwendung des Skimmer-Elements führt zu einem innerhalb des Wasserreinigungsgerätes niedrigeren Wasserpegel im Vergleich zur Teichwasseroberfläche, so daß einmal in das Wasserreinigungsgerät eingetretenes Schmutzwasser nicht mehr aus dem Wasserreinigungsgerät austreten kann.

Das Wasserreinigungsgerät ist in insgesamt drei Bereiche aufgeteilt. In einem ersten Bereich 6 befindet sich das noch ungereinigte Wasser. Dieser Bereich 6 ist von dem Bereich 7 durch einen vorteilhafterweise herausnehmbaren Grobschmutzabscheider 8 getrennt. Gemäß des dargestellten Ausführungsbeispiels ist der Grobabscheider 8 mittels eines Haltegriffes 9 aus seiner Funktionsstellung im Gehäuse 1 durch die oberseitige Öffnung zu entfernen, um beispielsweise auf einfache Weise gereinigt zu werden. Hierfür ist es zweckmäßig, vor der Herausnahme des Grobschmutzabscheiders 8 das Skimmer-Element, also den Faltenbalg 3 und die Skimmer-Klappe 3.1, mittels eines Verschlußelements 11 zu verschließen. Eine Verunreinigung eines unterhalb des Grobschmutzabscheiders 8 in dem Bereich 7 angeordneten Feinfilters 12 durch von außen nachströmendes Wasser wird hierdurch wirksam vermieden.

Das von grobem Schmutz gereinigte Wasser trifft nach Durchlaufen des Grobschmutzabscheider 8 auf die gesamte obere Seite des Feinfilters 12 auf und dringt entweder sofort in das Feinfiltermaterial oder in die vertikal verlaufenden Einströmkanäle 13 ein, um von dort in das Feinfiltermaterial vorzudringen. Nach der Säuberung des Wassers im Feinfiltermaterial gelangt das Wasser in die vorzugsweise horizontal verlaufenden Ausströmkanäle 14, die an einer mit Schlitzen oder anderen Durchgängen versehenen Trennwand 15 enden. Diese trennt wiederum den Bereich 7 von dem eine Pumpe 17 aufweisenden Bereich 16 des erfindungsgemäßen Wasserreinigungsgerätes.

Aus dem Pumpenbereich 16 wird das Wasser bei dem hier dargestellten erfindungsgemäßen Ausführungsbeispiel durch eine in dem Gehäuse angeordnete Strahlungsfiltervorrichtung, die als UVC-Filter 18 ausgebildet ist, in Richtung der unterhalb der Einlaßöffnung 2 angeordneten Auslaßöffnung 19 gepumpt. Von dort gelangt das Wasser wieder in den Teich.

Die Strahlungsfiltervorrichtung ist hierbei der Pumpe 17 vorteilhafterweise nachgeschaltet, wodurch das innerhalb des UVC-Filters 18 aufgrund der Bestrahlung verklumpende Material nicht durch die Pumpe 17 geleitet werden muß, sondern beim nächsten Reinigungsvorgang vor der Pumpe 17 herausgefiltert wird.

Wie dargestellt wird eine Anordnung bevorzugt, bei der der Grobschmutzabscheider 8 oberhalb des Feinfilters 12 und die Pumpe seitlich des Feinfilters 12 und unterhalb des Skimmer-Elements angeordnet ist. Dadurch lassen sich alle Komponenten des Wasserreinigungsgerätes sehr kompakt in einem verhältnismäßig kleinen Gehäuse 1 unterbringen. Auch führt die geschickte Anordnung u.a. der Pumpe 17 und des UVC-Filters 18 dazu, daß die Auslaßöffnung 19 nur knapp unterhalb der Einlaßöffnung 2 angebracht werden kann. Aufgrund der sehr geringen Höhenunterschiede zwischen Ein- und Auslauf und damit der geringen Druckhöhe kann die vorhandene Motorleistung der Pumpe 17 daher für ein hohes Fördervolumen genutzt werden.

Unterhalb des Feinfilters 12 bildet der Boden des Gehäuses 1 einen Sammelbereich 21 aus, in dem sich durch die vertikalen Einströmkanäle 13 gravitationsbedingt nach unten sinkende Schmutzteilchen ansammeln. Erfindungsgemäß ist vorsehen, diesen Bereich bei Bedarf mittels einer Reinigungsvorrichtung 22 zu reinigen. Hierfür weist die dargestellte Reinigungsvorrichtung 22 eine Druckwasserzufuhrleitung 23 auf, durch die Wasser in Richtung eines Ejektors 24 gedrückt werden kann. Das in dem Ejektorbereich mit dem sedimentierten Material vermischte Druckwasser wird durch eine aus dem Filterkreislauf herausführende Leitung 25 aus dem Wasserreinigungsgerät entfernt. Die Anschlüsse der Leitungen 23 und 25 sind hierbei so ausgeformt, daß sich handelsübliche Gartenschläuche anschließen lassen. Alternativ ist es auch denkbar, in dem Bereich 21 eine gegebenenfalls auch selbständig arbeitende Pumpe vorzusehen, die das sedimentierte Material, also ein Wasser-Schmutzteilchengemisch, aus dem Wasserreinigungsgerät heraus transportieren kann.

Das erfindungsgemäße Ausführungsbeispiel zeichnet sich insbesondere durch seine kompakte Bauweise aus. Dies wird unter anderem dadurch erreicht, daß einerseits die Ausgangsöffnung der Strahlungsfiltervorrichtung 18 direkt an die Ausgangsöffnung des Gehäuses 1 anflanschbar ist. Weiterhin ist durch geschickte Anordnung von Pumpe 17 und Strahlungsfilter 18 der direkte Anschluß des Strahlungsfilters 18 an einen Pumpenflansch 20 ermöglicht. Auf platzbenötigende Rohrleitungen kann daher verzichtet werden, was weiterhin eine Kostenersparnis und Vorteile bezüglich der von der Pumpe 17 aufzubringen Pumpenleistung mit sich bringt.

Nach Herausnahme des Grobschmutzabscheiders 8 kann auch der Feinfilter 12 zu Reinigungsarbeiten oder zu seinem Austausch aus dem Wasserreinigungsgerät herausgenommen werden. Ebenso ist es möglich, den Bereich 16, in dem Pumpe 17 und UVC-Filter 18 angeordnet sind, mittels einer dichten aber abnehmbaren Abdekkung 25.1 eingreifbar und damit ebenfalls zu Wartungszwecken zugänglich zu gestalten. Die verschienenen Funktionselemente des Wasserreinigungsgerätes sind somit zumindest teilweise voneinander unabhängig zugänglich.

Für die seitliche Unterbringung des Wasserreinigungsgerätes an einem Teich ist es notwendig, daß das Wasserreinigungsgerät entsprechende Befestigungsvorrichtungen aufweist. Hierbei hat es sich als vorteilhaft erwiesen, sowohl im Bereich der Eintritts- bzw. Einlaßöffnung 2 als auch im Bereich der Austrittsöffnung 19 Foliendichtflansche 26 zu verwenden, die einen sicheren Anschluß des Gehäuses 1 am Teich gewährleisten (Fig. 2). Es liegt hierbei ebenfalls im Rahmen der Erfindung, Auslaß- und Einlaßöffnung auf nicht dargestellte Weise so dicht untereinander anzuordnen, daß beide Öffnungen innerhalb nur eines Rahmens bzw. damit auch nur eines Foliendichtflansches angeordnet sind. Somit muß eine den Teich begrenzenden Folie nur einmal durchbrochen werden.

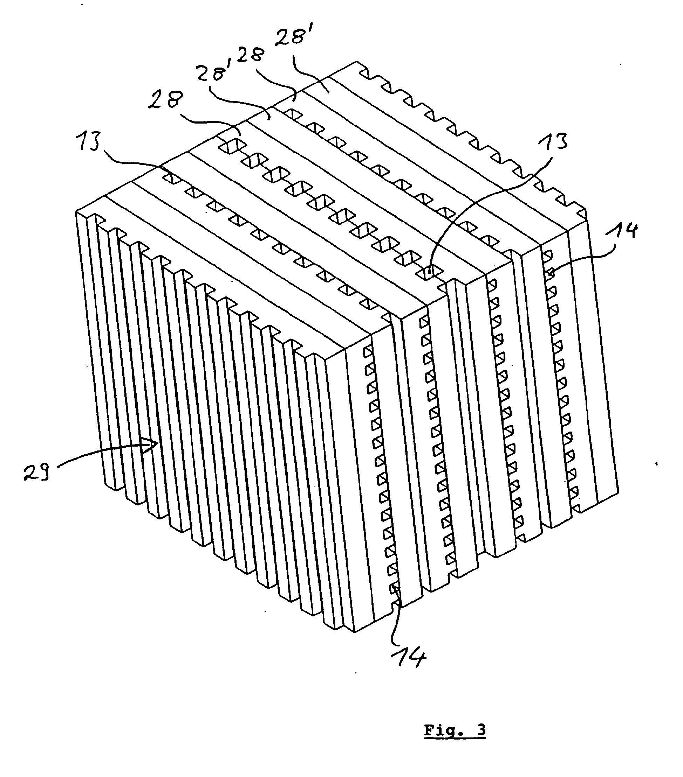

Der in Fig. 3 gezeigte Teil eines Feinfilters 12 verdeutlicht den Aufbau und die Wirkungsweise des Feinfilters 12. Die einzelnen Schichten 28 bzw. Lagen des Feinfilters bestehen aus einem feinporigen Material, beispielsweise einem Schaum, und können von Schicht 28 zu Schicht 28' z.B. abwechselnd auch mit unterschiedlichen Porengrößen versehen sein. Ebenfalls ist denkbar, daß die einzelnen Schichten 28, 28' Bereiche unterschiedlicher Porengrößen aufweisen. Durch die unterschiedlichen Porengrößen wird gewährleistet, daß einerseits in den Bereichen mit größeren Poren genügend Sauerstoff im Wasser vorhanden ist, um eine zumindest teilweise Nitrifizierung des aus dem Wasser zu entfernenden Materials herbeizuführen. In den kleineren Poren, in denen für eine Nitrifizierung nicht mehr genügend Sauerstoff zur Verfügung steht, findet dann eine für den Reinigungsprozeß ebenfalls förderliche Denitrifizierung statt.

Im Einsatz des Wasserreinigungsgerätes lagern sich in dem Feinfilter 12 Bakterien an, die neben der durch das Filtermaterial bewirkten mechanischen Reinigung zur biologischen Reinigung des Wassers beitragen. Das von den Bakterien umgesetzte Material, sofern es nicht mit Wasser weiter in Richtung der Pumpen/UVC-Einheit transportiert wird, sinkt ansonsten durch die vertikalen Kanäle 13 in Richtung des Sammelbereiches 21 unten im Gehäuse 1.

Der Fig. 3 ist weiterhin zu entnehmen, daß die Filterschichten 28,28' jeweils auf einer Seite mit einem Profil 29 ausgebildet sind, welches es ermöglicht, mit einer angrenzenden Schicht 28, 28' Kanäle 13, 14 auszubilden. So können beispielsweise größere Kanäle 13 ausgebildet werden, indem zwei Schichten 28 mit ihren beiden Profilseiten aneinandergelegt werden. Schmalere Kanäle bilden sich entsprechend durch die Anlage einer profilierten Seite an eine glatte Seite der Filterschichten 28, 28'.

Sowohl die Quer- bzw. Ausströmkanäle aufweisenden Filterschichten 28' als auch die Vertikal- bzw. Einströmkanäle 13 aufweisenden Filterschichten 28 sind identisch aufgebaut. Dies bedeutet, daß das gleiche Material für beide Schichten verwendet werden kann. Es wird produktionsseitig kein weiteres Werkzeug benötigt. Die Verwendung mit identischen Abmessungen versehener Schichten 28 mit dennoch unterschiedlichen Funktionen (Einström- und Ausströmkanäle 13, 14) führt zu einer verschnittfreien und damit kostengünstigen Verwendung des Feinfiltermaterials.

Der unterhalb des Grobschmutzabscheiders 8 angeordnete Feinfilter 12 kann auf seiner gesamten oberen Seite von dem zu reinigenden Wasser angeströmt werden. Dieses tritt, wie bereits beschrieben, entweder direkt in das Filtermaterial oder in die vertikalen Kanäle 13 ein und kann entlang der vertikalen Kanäle 13 in verschiedenen Tiefen innerhalb des Feinfilters 12 durch das Filtermaterial in die Ausströmkanäle 14 gelangen. Die Ausströmkanäle 14 sind über die gesamte Seitenwand des Feinfilters 12 mit der Trennwand 15 verbunden und gelangen durch die in der Trennwand 15 vorgesehenen Öffnungen auf ebenfalls gesamter Breite des Filterblocks in den Pumpenbereich 16. Die sehr große Anströmfläche des Feinfilters 12 führt zu einer niedrigen Filtergeschwindigkeiten und daher entsprechend langen Durchlauf des zu säubernden Wassers innerhalb des Feinfilters 12. Es steht mehr Zeit für den biologischen Abbau des Materials zur Verfügung, was den Reinigungseffekt verstärkt.

Der unterhalb des Feinfilters 12 angeordnete Sammelbereich 21 weist außer der Übertrittsfläche zum Feinfilter 12 nur dann einen Abfluß auf, wenn der Sammelbereich 21 gereinigt wird. Er ist daher im Normalbetrieb des gezeigten Wasserreinigungsgerätes strömungsfrei, wodurch eine gute Ablagerung des nach unten sinkenden Materials gewährleistet ist und der Feinfilter 12 keiner größeren Verschmutzung ausgesetzt wird.

Ein erfindungsgemäßes Wasserreinigungsgerät gemäß der dargestellten Ausführungsbeispiele vereinigt somit drei Filterfunktionen im einem einzigen Gehäuse und kann daher die bisher im Stand der Technik bekannten, große Flächen und Volumina einnehmenden Filteranlagen, die auch meist leistungsstarke Pumpen mit hoher Energieaufnahme benötigen, ersetzen.

## Patentansprüche

1. Kompaktes Wasserreinigungsgerät mit einem Gehäuse (1), das zumindest eine Befestigungsvorrichtung (26) zum Anbringen des Wasserreinigungsgeräts an einem Teichrand und eine gewässerseitig anzuordnende Einlassöffnung (2) aufweist, die über ein als Skimmer ausgebildetes, bewegliches Schließelement (3) zumindest teilweise schließbar ist, sowie mit einem Grobschmutzabscheider (8) und einer Pumpe (17), wobei die das Wasser in Richtung einer Auslassöffnung (19) des Gehäuses (1) transportierende Pumpe (17) und der Grobschmutzabscheider (8) innerhalb des Gehäuses (1) angeordnet sind, und wobei das Wasserreinigungsgerät einen strömungsmäßig dem Grobschmutzabscheider (8) nachgeschalteten Feinfilter (12) aufweist, welcher ebenfalls innerhalb des Gehäuses (1) angeordnet ist, und die Pumpe (17) und eine als UVC-Filter ausgebildete Strahlungsfiltervorrfchtung (18) in einem von dem Grobschmutzabscheider (8) und dem Feinfilter (12) räumlich getrennten Bereich (16) des Gehäuses (1) angeordnet sind.

2. Wasserreinigungsgerät nach Anspruch 1, **dadurch gekennzeichnet, daß** der Feinfilter (12) strömungsmäßig vor der Pumpe (17) angeordnet ist.

3. Wasserreinigungsgerät nach Anspruch 1 oder 2, **dadurch gekennzeichnet, daß** der Feinfilter (12) aus seiner Funktionsstellung in dem Gehäuse (1) entnehmbar ist.

4. Wasserreinigungsgerät nach einem der Ansprüche 1 bis 3, **dadurch gekennzeichnet, daß** der Feinfilter (12) zumindest einen Einströmkanal (13) und zumindest einen dazu quer verlaufenden Ausströmkanal (14) aufweist, der von dem Einströmkanal (13) durch Feinfiltermaterial getrennt ist.

5. Wasserreinigungsgerät nach Anspruch 4, **dadurch gekennzeichnet, daß** ein Ende eines Ausströmkanals (14) zu einem Pumpenbereich (16) des Gehäuses führt.

6. Wasserreinigungsgerät nach einem der Ansprüche 4 oder 5, **dadurch gekennzeichnet, daß** der Feinfilter (12) aneinander anliegende Schichten (28) von Feinfiltermaterial aufweist, deren jeweils einseitig vorhandene Profilierung (29) mit der angrenzenden Schicht Strömungskanäle (13, 14) ausbildet.

7. Wasserreinigungsgerät nach einem der Ansprüche 1 bis 6, **dadurch gekennzeichnet, daß** das im Feinfilter (12) verwendete Material Bereiche unterschiedlicher Porengröße aufweist.

8. Wasserreinigungsgerät nach einem der Ansprüche 1 bis 7, **dadurch gekennzeichnet, daß** der Grobschmutzabscheider (8) aus seiner Funktionsstellung in dem Gehäuse (1) entnehmbar ist.

9. Wasserreinigungsgerät nach einem der Ansprüche 1 bis 8, **dadurch gekennzeichnet, daß** der Grobschmutzabscheider (8) einen Haltegriff (9) aufweist.

10. Wasserreinigungsgerät nach einem der Ansprüche 1 bis 9, **gekennzeichnet durch** einen Sammelbereich (21) zur Aufnahme von in dem Wasserreinigungsgerät sedimentiertem Material.

11. Wasserreinigungsgerät nach Anspruch 10, **dadurch gekennzeichnet, daß** ein Bodenbereich des Gehäuses (1) den Sammelbereich (21) ausbildet.

12. Wasserreinigungsgerät nach Anspruch 1, **dadurch gekennzeichnet, daß** der Sammelbereich (21) im Normalbetrieb des Wasserreinigungsgerätes strömungsfrei ist.

13. Wasserreinigungsgerät nach Anspruch 10, 11 oder 12, **gekennzeichnet durch** eine Reinigungsvorrichtung (22) zur Reinigung des Sammelbereiches (21).

14. Wasserreinigungsgerät nach Anspruch 13, **dadurch gekennzeichnet, daß** die Reinigungsvorrichtung (22) zumindest eine aus dem Filterkreislauf herausführende Leitung (25) aufweist.

15. Wasserreinigungsgerät nach Anspruch 14, **dadurch gekennzeichnet, daß** die Reinigungsvorrichtung (22) eine Druckwasserzufuhrleitung (23) und einen in dem Sammelbereich (21) angeordneten Ejektor (24) aufweist.

16. Wasserreinigungsgerät nach Anspruch 13 oder 14, **dadurch gekennzeichnet, daß** die Reinigungsvorrichtung (22) eine Pumpe zum Abtransport des sedimentierten Materials aufweist.

17. Wasserreinigungsgerät nach einem der vorherigen Ansprüche, **dadurch gekennzeichnet, daß** die Strahlungsfiltervorrichtung (18) der Pumpe (17) strömungsmäßig nachgeschaltet ist.

18. Wasserreinigungsgerät nach Anspruch 17, **dadurch gekennzeichnet, daß** die Ausgangsöffnung der Strahlungsfiltervorrichtung (18) direkt an die Auslaßöffnung (19) des Gehäuses (1) anflanschbar ist.

19. Wasserreinigungsgerät nach einem der Ansprüche 1 bis 18, **dadurch gekennzeichnet, daß** die Strahlungsfiltervorrichtung (18) direkt an die Pumpe (17) anflanschbar ist.

20. Wasserreinigungsgerät nach einem der Ansprüche 1 bis 19, **dadurch gekennzeichnet, daß** die Befestigungsvorrichtung (26) ein Foliendichtflansch ist.

21. Wasserreinigungsgerät nach einem der Ansprüche 1 bis 20, **dadurch gekennzeichnet, daß** die Eingangsöffnung (2) und die Auslaßöffnung (19) des Wasserreinigungsgerätes in einem gemeinsamen Rahmen oder Foliendichtflansch des Gehäuses (1) angeordnet sind.

22. Wasserreinigungsgerät nach einem der Ansprüche 1 bis 21, **dadurch gekennzeichnet, daß** ein eine Gehäuseöffnung schließender Deckel zur Ausbildung einer Begrünungsaufnahrne umgekehrt auf das Gehäuse (1) und dieses abdichtend aufsetzbar ist.

## Claims

1. Compact water cleaning unit having a housing (1) which has at least one fastening device (26) for mounting the water cleaning unit on the edge of a pond and an inlet opening (2) which is to be arranged on the side on which the pond is situated, which inlet opening (2) can be at least partly closed by a movable closing member (3) which takes the form of a skimmer, having a filter (8) for coarse matter and a pump (17), the filter (8) for coarse matter and the pump (17), which latter transports the water in the direction of an outlet opening (19) from the housing (1), being arranged inside the housing (1), and the water cleaning unit having a fine filter (12) which, as defined by flow, is positioned downstream of the filter (8) for coarse matter and which is likewise situated inside the housing (1), and the pump (17), and a filter device (18) operating by radiation which takes the form of a UVC filter, being arranged in a region (16) of the housing (1) which is separated in space from the filter (8) for coarse matter and the fine filter (12).

2. Water cleaning unit according to claim 1, **characterised in that**, as defined by flow, the fine filter (12) is arranged upstream of the pump (17).

3. Water cleaning unit according to claim 1 or 2, **characterised in that** the fine filter (12) can be removed from its operating position in the housing (1).

4. Water cleaning unit according to one of claims 1 to 3, **characterised in that** the fine filter (12) has at least one inflow passage (13), and at least one outflow passage (14) extending transversely thereto which is separated from the inflow passage (13) by fine filtering material.

5. Water cleaning unit according to claim 4, **characterised in that** one end of an outflow passage (14) runs to a pump region (16) of the housing.

6. Water cleaning unit according to either of claims 4 and 5, **characterised in that** the fine filter (12) has layers (28) of fine filtering material which rest against one another and the profiling (29) which is present on one side of each of the layers (28) forms passages for flow (13, 14) with the adjoining layer.

7. Water cleaning unit according to one of claims 1 to 6, **characterised in that** the material used in the fine filter (12) has regions of different pore sizes.

8. Water cleaning unit according to one of claims 1 to 7, **characterised in that** filter (8) for coarse matter can be removed from its operating position in the housing (1).

9. Water cleaning unit according to one of claims 1 to 8, **characterised in that** the filter (8) for coarse matter has a handle (9).

10. Water cleaning unit according to one of claims 1 to 9, **characterised by** a collecting region (21) to receive material which settles in the water cleaning unit.

11. Water cleaning unit according to claim 10, **characterised in that** a region of the floor of the housing (1) forms the collecting region (21).

12. Water cleaning unit according to claim 1, **characterised in that** there is no flow in the collecting region (21) when the water cleaning unit is operating normally.

13. Water cleaning unit according to claim 10, 11 or 12, **characterised by** a cleaning arrangement (22) for cleaning the collecting region (21).

14. Water cleaning unit according to claim 13, **characterised in that** the cleaning arrangement (22) has at least one duct (25) which runs out of the filter circuit.

15. Water cleaning unit according to claim 14, **characterised in that** the cleaning arrangement (22) has an infeed duct (23) for pressurised water and an ejector (24) which is arranged in the collecting region (21).

16. Water cleaning unit according to claim 13 or 14, **characterised in that** the cleaning arrangement (22) has a pump to take away the material which has settled.

17. Water cleaning unit according to one of the preceding claims, **characterised in that**, as defined by flow, the filter device (18) operating by radiation is positioned downstream of the pump (17).

18. Water cleaning unit according to claim 17, **characterised in that** the outlet opening from the filter device (18) operating by radiation can be flange-mounted directly to the outlet opening (19) from the housing (1).

19. Water cleaning unit according to one of claims 1 to 18, **characterised in that** the filter device (18) operating by radiation can be flange-mounted directly to the pump (17).

20. Water cleaning unit according to one of claims 1 to 19, **characterised in that** the fastening device (26) is a film or foil sealed flange.

21. Water cleaning unit according to one of claims 1 to 20, **characterised in that** the inlet opening (2) and the outlet opening (19) of the water cleaning unit are arranged in a common frame or film or foil sealed flange belonging to the housing (1).

22. Water cleaning unit according to one of claims 1 to 21, **characterised in that**, to form a receptacle for greenery, a cover which closes an opening in the housing can be turned over and placed down on the housing (1), thus sealing off the latter.

## Revendications

1. Purificateur d'eau compact comportant un boîtier (1) qui présente au moins un dispositif de fixation (26) pour installer le purificateur d'eau sur la rive d'un étang et une ouverture d'admission à disposer du côté de l'eau (2) qui peut être fermée au moins partiellement par un élément de fermeture mobile (3) conçu comme une pelle et un séparateur d'impuretés grossières (8) et une pompe (17), dans lequel la pompe (17) transportant l'eau en direction d'une ouverture d'évacuation (19) du boîtier (1) et le séparateur d'impuretés grossières (8) sont disposés à l'intérieur du boîtier (1) et dans lequel le purificateur d'eau présente un filtre fin (12) en aval du séparateur d'impuretés grossières selon l'écoulement, qui est également disposé à l'intérieur du boîtier (1) et la pompe (17) et un dispositif de filtrage du rayonnement constitué comme un filtre UVC (18) sont disposés dans une zone spatialement séparée du séparateur de particules grossières (8) et du filtre fin (12).

2. Purificateur d'eau selon la revendication 1, **caractérisé en ce que** le filtre fin (12) est disposé selon l'écoulement, avant la pompe (17).

3. Purificateur d'eau selon la revendication 1 ou 2, **caractérisé en ce que** le filtre fin (12) peut être retiré de sa position de fonctionnement dans le boîtier (1).

4. Purificateur d'eau selon l'une des revendications 1 à 3, **caractérisé en ce que** le filtre fin (12) présente au moins un canal d'amenée (13) et au moins un canal de sortie (14) perpendiculaire à celui-ci qui est séparé du canal d'amenée (13) par un matériau de filtrage fin.

5. Purificateur d'eau selon la revendication 4, **caractérisé en ce qu'**une extrémité d'un canal de sortie (14) conduit à une zone de pompe (16) du boîtier.

6. Purificateur d'eau selon l'une des revendications 4 ou 5, **caractérisé en ce que** le filtre fin (12) présente des couches (28) de matériau fin disposées de façon contiguë dont le profil (29) unilatéral respectif présent forme avec la couche limitrophe, des canaux d'écoulement (13, 14).

7. Purificateur d'eau selon l'une des revendications 1 à 6, **caractérisé en ce que** dans le filtre fin (12), le matériau utilisé présente des zones comportant des tailles de pores différentes.

8. Purificateur d'eau selon l'une des revendications 1 à 7, **caractérisé en ce que** le séparateur d'impuretés grossières (8) peut être retiré de sa position de fonctionnement dans le boîtier (1).

9. Purificateur d'eau selon l'une des revendications 1 à 8, **caractérisé en ce que** le séparateur d'impuretés grossières (8) présente une poignée (9).

10. Purificateur d'eau selon l'une des revendications 1 à 9, **caractérisé par** une zone de recueil (21) pour recevoir le matériau sédimenté dans le purificateur.

11. Purificateur d'eau selon la revendication 10, **caractérisé en ce qu'**une zone de fond du boîtier (1) constitue la zone de recueil (21).

12. Purificateur d'eau selon la revendication 1, **caractérisé en ce que** la zone de recueil (21) ne présente pas d'écoulement dans le cas du fonctionnement normal du purificateur.

13. Purificateur d'eau selon la revendication 10, 11 ou 12, **caractérisé par** un dispositif de purification (22) pour purifier la zone de recueil (21).

14. Purificateur d'eau selon la revendication 13, **caractérisé en ce que** le dispositif de purification (22) présente au moins une conduite (25) sortant du circuit de filtrage.

15. Purificateur d'eau selon la revendication 14, **caractérisé en ce que** le dispositif de purification (22) présente une conduite d'amenée d'eau sous pression (23) et un éjecteur (24) disposé dans la zone de recueil (21).

16. Purificateur d'eau selon la revendication 13 ou 14, **caractérisé en ce que** le dispositif de purification (22) comprend une pompe pour l'évacuation du matériau sédimenté.

17. Purificateur d'eau selon l'une des revendications précédentes, **caractérisé en ce que** le dispositif de filtrage de rayonnement (18) de la pompe (17) est en aval selon l'écoulement.

18. Purificateur d'eau selon la revendication 17, **caractérisé en ce que** l'ouverture de sortie du dispositif de filtrage de rayonnement (18) peut être raccordé directement à l'ouverture d'évacuation (19) du boîtier (1).

19. Purificateur d'eau selon l'une des revendications 1 à 18, **caractérisé en ce que** le dispositif de filtrage de rayonnement (18) peut être raccordé directement à la pompe (17).

20. Purificateur d'eau selon l'une des revendications 1 à 19, **caractérisé en ce que** le dispositif de fixation (26) est un joint plat en feuille.

21. Purificateur d'eau selon l'une des revendications 1 à 20, **caractérisé en ce que** l'ouverture d'admission (2) et l'ouverture d'évacuation (19) du purificateur d'eau sont disposés dans un cadre commun ou joint d'étanchéité en feuille du boîtier (1).

22. Purificateur d'eau selon l'une des revendications 1 à 21, **caractérisé en ce qu'**un couvercle fermant une ouverture du boîtier peut être placé inversé sur le boîtier pour former un site d'enherbement (1) et celui-ci peut être placé de façon étanche.
